# EUROPEAN PATENT APPLICATION

(11) **EP 2 439 020 A1**
(43) Date of publication of application: **11.04.2012**
(21) Application number: 09845573.6
(22) Date of filing: 22.06.2009
(51) Int. Cl.: B25B 11/00

(54) **HOLDING FIXTURE FOR AIRCRAFT PARTS**

(30) Priority: 01.06.2009 KR 20090048097
(71) Applicant: Korea Aerospace Industries, Ltd., Gyeongsangnam-do 664-710 (KR)
(72) Inventor: JO, Yeong Rae, Sacheon-si Gyeongsangnam-do 664-710 (KR)
(74) Representative: Higgin, Paul
(86) International application number: PCT/KR2009/003325
(87) International publication number: WO 2010/140731

(57) **Abstract**

Disclosed herein is an aircraft part holding fixture. The aircraft part holding fixture includes a plurality of separated base plates, each of the plural separated base plates being formed with a plurality of riser blocks, each of the plural riser blocks having, at an upper portion thereof, at least one through hole, and an aircraft part mounted on the plural riser blocks after the plural separated base plates are set on a working equipment, in order to process a hole corresponding to the through hole. As a result, it may be possible to obtain weight and cost reduction.

## Description

### [Technical Field]

The present invention relates to an aircraft part holding fixture, and more particularly to an aircraft part holding fixture capable of achieving weight and cost reduction.

### [Background Art]

In general, when processing a hole in an aircraft part, a worker forms the hole using processing equipment after mounting the aircraft part on a holding fixture.

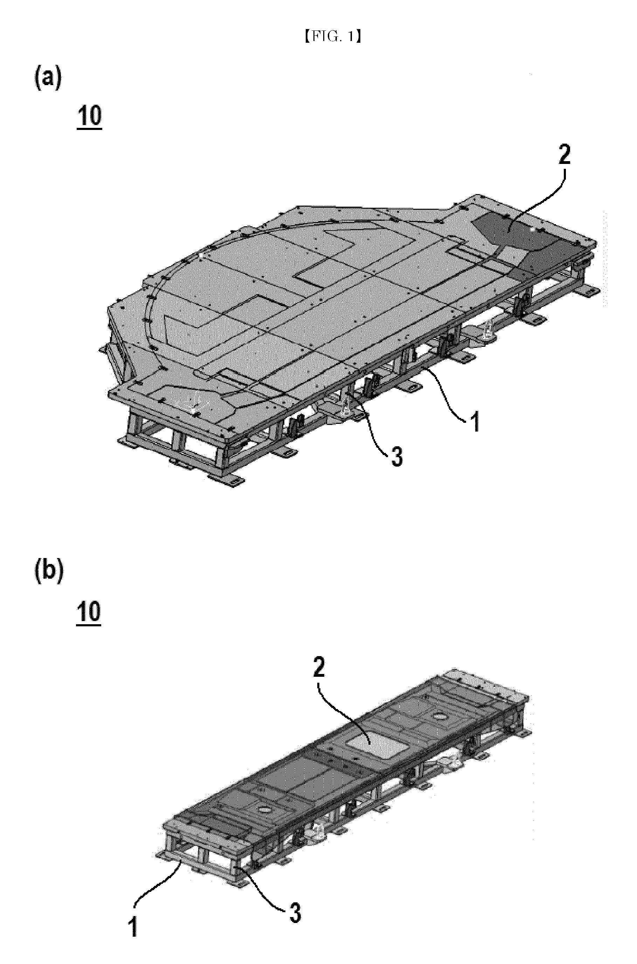

FIG. 1 is views illustrating a conventional aircraft part holding fixture.

Referring to FIG. 1, the conventional aircraft part holding fixture 10 includes a base plate 1 made of steel and a plurality of riser blocks 2 made of aluminum materials.

The conventional aircraft part holding fixture 10 having such a configuration is heavy due to the base plate 1 and a lower structure 3 of the base plate 1. Consequently, there are problems in that lifting of the aircraft part holding fixture 10 is not easy, and safety accidents frequently occur.

Furthermore, there are problems in that it takes considerable time to manufacture the lower structure 3, an enormous amount of development costs is spent due to high material costs, and increase in processing costs is caused by unfavorable processability.

### [Disclosure]

### [Technical Problem]

Therefore, the present invention has been made in view of the above problems, and it is an object of the present invention to provide a lightweight aircraft part holding fixture.

It is another object of the present invention to provide an aircraft part holding fixture capable of achieving reduction in high material costs.

It is another object of the present invention to provide an aircraft part holding fixture capable of achieving reduction in processing costs.

It is another object of the present invention to provide an aircraft part holding fixture capable of being configured in a separated type.

It is a further object of the present invention to provide an aircraft part holding fixture capable of achieving reduction in development costs.

### [Technical Solution]

In accordance with an aspect of the present invention, the above and other objects can be accomplished by the provision of an aircraft part holding fixture including a plurality of separated base plates, each of the plural separated base plates being formed with a plurality of riser blocks, each of the plural riser blocks having, at an upper portion thereof, at least one through hole, and an aircraft part mounted on the plural riser blocks after the plural separated base plates are set on a working equipment, in order to process a hole corresponding to the through hole.

Each of the base plates may be made of an aluminum material, and each of the riser blocks may be made of a mono cast nylon material.

### [Advantageous Effects]

The present invention has an effect of enabling realization of weight reduction by usage of a light material.

Also, the present invention has an effect of reducing a variety of expenses such as processing costs, development costs, etc., thereby obtaining improved productivity.

### [Description of Drawings]

The above and other objects, features and other advantages of the present invention will be more clearly understood from the following detailed description taken in conjunction with the accompanying drawings, in which:
FIG. 1 is views illustrating a conventional aircraft part holding fixture;
FIG. 2 is a perspective view illustrating an aircraft part holding fixture according to an exemplary embodiment of the present invention;
FIG. 3 is views illustrating a riser block of the aircraft part holding fixture according to the exemplary embodiment of the present invention;
FIG. 4 is views illustrating an appearance in which the aircraft part holding fixture according to the exemplary embodiment of the present invention is separated; and
FIG. 5 is a view illustrating an appearance in which the aircraft part holding fixture according to the exemplary embodiment of the present invention is actually manufactured and set.

### [Best Mode]

Hereinafter, exemplary embodiments of the present invention will be described in more detail with reference to the accompanying drawings so as to be easily realized by those skilled in the art. The present invention may, however, be embodied in different forms and should not be constructed as limited to the embodiments set forth herein.

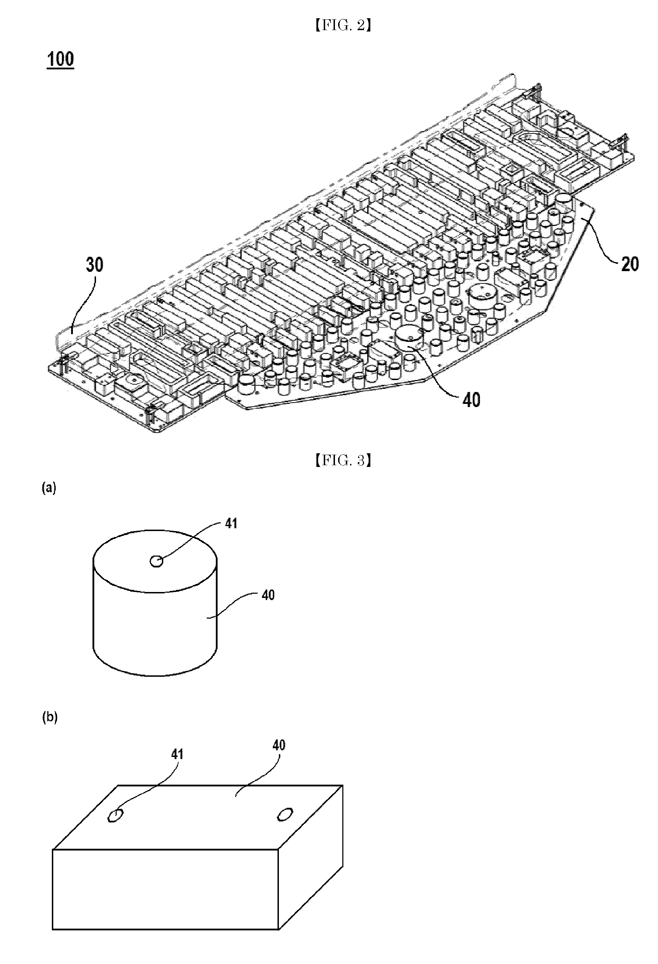

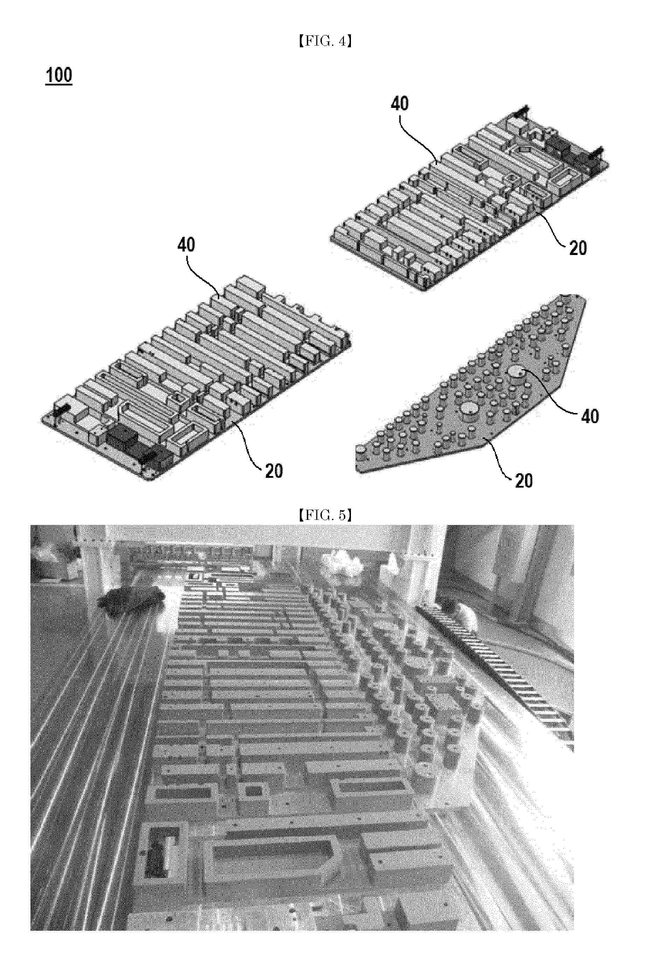

FIG. 2 is a perspective view illustrating an aircraft part holding fixture according to an exemplary embodiment of the present invention. FIG. 3 is views illustrating a riser block of the aircraft part holding fixture according to the exemplary embodiment of the present invention. FIG. 4 is views illustrating an appearance in which the aircraft part holding fixture according to the exemplary embodiment of the present invention is separated.

Referring to FIGS. 2 to 4, the aircraft part holding fixture, which is designated by reference numeral 100, according to the exemplary embodiment of the present invention includes base plates 20 and an aircraft part 30 mounted on the base plates 20 so as to be processed.

As shown in FIG. 4, a plurality of base plates 20 is configured as a set of base plates 20, thereby enabling realization of weight reduction. The set of base plates 20 has a shape corresponding to the aircraft part 30 which is to be processed.

In addition, each of the base plates 20 is manufactured and processed using an aluminum material, thereby further reducing weight thereof.

The base plate 20 is formed, on an upper surface thereof, with a plurality of riser blocks 40. Each of the riser blocks 40 has, at an inner side thereof, at least one through hole 41 so that an end of processing equipment may be inserted into the through hole 41.

The through hole 41 has a sectional shape corresponding to a hole (not shown) which is to be processed in the aircraft part 30 so as to specify a processing position and size of the hole.

In this case, the through hole 41 may be configured as two or more through holes if necessary. Also, each riser block 40 is preferably made of a mono cast nylon material which is light and has favorable processability.

The configuration of the aircraft part holding fixture according to the exemplary embodiment of the present invention has been described above. Hereinafter, operation of the aircraft part holding fixture according to the exemplary embodiment of the present invention will be described.

First, the plural separated base plates 20 are placed and set on working equipment according to a shape of the aircraft part 30.

Subsequently, the aircraft part 30 is placed and mounted on the plural riser blocks 40, and then the hole corresponding to the through hole 41 is processed at a top of the aircraft part 30 via the processing equipment.

For reference, FIG. 5 shows an appearance in which the aircraft part holding fixture according to the exemplary embodiment of the present invention is actually manufactured and set.

Various embodiments have been described in the best mode for carrying out the invention.

Although the exemplary embodiments of the present invention have been disclosed for illustrative purposes, those skilled in the art will appreciate that various modifications, additions and substitutions are possible, without departing from the scope and spirit of the invention as disclosed in the accompanying claims.

Therefore, it should be understood that the invention is intended to cover not only the exemplary embodiments, but also various alternatives, modifications, equivalents and other embodiments, which may be included within the spirit and scope of the invention as defined by the appended claims.

## Claims

1. An aircraft part holding fixture comprising:
a plurality of separated base plates, each of the plural separated base plates being formed with a plurality of riser blocks, each of the plural riser blocks having, at an upper portion thereof, at least one through hole; and
an aircraft part mounted on the plural riser blocks after the plural separated base plates are set on a working equipment, in order to process a hole corresponding to the through hole.

2. The aircraft part holding fixture according to claim 1, wherein each of the base plates is made of an aluminum material, and each of the riser blocks is made of a mono cast nylon material.
